# EUROPÄISCHE PATENTANMELDUNG

(11) **EP 4 790 499 A1**
(43) Veröffentlichungstag der Anmeldung: **12.08.2026**
(21) Anmeldenummer: 25156612.1
(22) Anmeldetag: 07.02.2025
(51) Int. Cl.: G05B 19/418, H04L 65/00, H04L 67/00

(54) **AUTOMATISIERUNGSANORDNUNG**

(71) Anmelder: Siemens Aktiengesellschaft, 80333 München (DE)
(72) Erfinder: Schneider, Dirk, 08115 Lichtentanne (DE)
(74) Vertreter: Siemens Patent Attorneys

(57) **Zusammenfassung**

Die Erfindung betrifft eine Automatisierungsanordnung (101), umfassend:
eine IT-Ebene (IT), in welcher mittels einer IT-Infrastruktur, eine Verarbeitung, Erstellung, Speicherung, ein Austausch und ein Abrufen von Daten realisiert ist,
eine OT-Ebene, in welcher mittels Automatisierungskomponenten (AG1,AG2, FG1,...,FG4) eine Überwachung und eine Steuerung von industriellen Prozessen (100) realisiert ist,
ein Datennetzwerk (PN) auf Ethernet-Basis, welche für eine Kommunikation zwischen der IT-Ebene (IT) und der OT-Ebene ausgestaltet und angeordnet ist, wobei mindesten eine Automatisierungskomponente (AG1,AG2, FG1,...,FG4) als ein Feldgerät (FG1,...,FG4) ausgestaltet ist und ein Feldgerät (FG1,...,FG4) mindestens ein Modul (M1,...,M4) aufweist, wobei das oder die Module (M1,...,M4) über einen Feldgeräte-Bus (RB) untereinander und mit dem Feldgerät (FG1,...,FG4) kommunizieren, wobei in der IT-Infrastruktur zumindest zu einem Teil der physischen Feldgeräte (FG1,...,FG4) in der OT-Ebene (OT) je ein virtuelles Feldgerät (vFG1,...,vFG4) in der IT-Ebene (IT) zugeordnet ist, wobei die einander zugeordneten physischen Feldgeräte (FG1,...,FG4) und die virtuellen Feldgeräte (vFG1,...,vFG4) ausgestaltet sind über das Datennetzwerk (PN) mit einem Konvergenz-Protokoll (CP) zu kommunizieren.

## Beschreibung

Die Erfindung betrifft eine Automatisierungsanordnung, umfassend: eine IT-Ebene, in welcher mittels einer IT-Infrastruktur, eine Verarbeitung, Erstellung, Speicherung, ein Austausch und ein Abrufen von Daten realisiert ist,
eine OT-Ebene, in welcher mittels Automatisierungskomponenten eine Überwachung und eine Steuerung von industriellen Prozessen realisiert ist,
ein Datennetzwerk auf Ethernet-Basis, welche für eine Kommunikation zwischen der IT-Ebene und der OT-Ebene ausgestaltet und angeordnet ist, wobei mindesten eine Automatisierungskomponente als ein Feldgerät ausgestaltet ist und ein Feldgerät mindestens ein Modul aufweist, wobei das oder die Module über einen Feldgeräte-Bus untereinander und mit dem Feldgerät kommunizieren.

Die Automatisierungsanordnung umfasst demnach zwei Hauptebenen: eine IT-Ebene und eine OT-Ebene (Operational Technology). Diese Ebenen sind durch ein Ethernet-basiertes Datennetzwerk miteinander verbunden, was eine nahtlose Kommunikation zwischen den beiden Bereichen ermöglicht. Die IT-Ebene ist mit einer fortschrittlichen IT-Infrastruktur ausgestattet. Diese Infrastruktur ist verantwortlich für verschiedene Datenoperationen, einschließlich der Verarbeitung, Erstellung, Speicherung, des Austauschs und des Abrufs von Daten. Sie bildet das Rückgrat für die Informationsverarbeitung und - verwaltung innerhalb der Automatisierungsanordnung. Die OT-Ebene hingegen beherbergt die Automatisierungskomponenten. Diese Komponenten sind speziell dafür konzipiert, industrielle Prozesse zu überwachen und zu steuern. Sie bilden die Schnittstelle zwischen der digitalen Steuerung und den physischen Produktionsprozessen. Ein Schlüsselelement der OT-Ebene sind die Feldgeräte. Mindestens eine der Automatisierungskomponenten ist als Feldgerät ausgestaltet. Jedes Feldgerät kann ein oder mehrere Module enthalten. Diese Module sind über einen speziellen Feldgeräte-Bus miteinander und mit dem übergeordneten Feldgerät verbunden, was eine effiziente interne Kommunikation ermöglicht.

Da sich in der industriellen Automatisierung ein starker Trend hin zu einer Verschmelzung (Konvergenz) von IT- (Information Technology) und OT- (Operational Technology) Ebene etabliert hat, ist es eine Aufgabe der Erfindung die hierdurch entstehenden technischen Herausforderungen zu lösen, um dadurch einen Mehrwert für Anlagenbetreiber zu schaffen.

Die Aufgabe wird dadurch gelöst, dass in der IT-Infrastruktur zumindest zu einem Teil der physischen Feldgeräte in der OT-Ebene je ein virtuelles Feldgerät in der IT-Ebene zugeordnet ist, wobei die einander zugeordneten physischen Feldgeräte und die virtuellen Feldgeräte ausgestaltet sind über das Datennetzwerk mit einem Konvergenz-Protokoll zu kommunizieren.

In der erfindungsgemäßen Automatisierungsanordnung ist die Zuordnung von virtuellen Feldgeräten in der IT-Ebene zu den physischen Feldgeräten in der OT-Ebene ein Hauptaspekt. Jedem physischen Feldgerät ist mindestens ein virtuelles Pendant in der IT-Infrastruktur zugeordnet. Diese Paarung ermöglicht eine erweiterte Funktionalität und verbesserte Integration zwischen IT und OT.

Die Erfindung bringt mehrere bedeutende Vorteile für industrielle Automatisierungssysteme:
1. Verbesserte Integration von IT und OT:
   Die Zuordnung virtueller Feldgeräte zu physischen Feldgeräten schafft eine nahtlose Verbindung zwischen der IT-Ebene und der OT-Ebene. Dies ermöglicht eine effizientere Datenverarbeitung und -analyse, da Informationen aus der Produktionsebene direkt in IT-Systeme integriert werden können.
2. Erhöhte Flexibilität:
   Durch die Virtualisierung von Feldgeräten wird die Konfiguration und Verwaltung von Automatisierungskomponenten flexibler. Änderungen können zunächst in der virtuellen Umgebung getestet und dann auf die physischen Geräte übertragen werden, was Risiken bei Systemänderungen reduziert.
3. Verbesserte Skalierbarkeit:
   Die Architektur erlaubt es, das System einfacher zu erweitern oder zu modifizieren, indem neue virtuelle Geräte hinzugefügt oder bestehende angepasst werden können, ohne direkt in die physische Infrastruktur eingreifen zu müssen. Das Konvergenz-Protokoll ermöglicht eine effiziente bidirektionale Echtzeitkommunikation zwischen virtuellen und physischen Geräten. Dies verbessert die Datenübertragung und ermöglicht schnellere
Reaktionszeiten in der Automatisierung. Die Speicherung von Konfigurationsdaten auf den virtuellen Feldgeräten ermöglicht eine zentralisierte Verwaltung und schnelle Rekonfiguration von physischen Geräten, was die Wartung und Aktualisierung des Systems vereinfacht.

Die virtuellen Repräsentationen der Feldgeräte ermöglichen eine detailliertere Überwachung und Diagnose, ohne den laufenden Betrieb zu stören. Die Integration von IT- und OT-Ebene erleichtert die Implementierung von fortschrittlichen Analysemethoden, maschinellem Lernen und Kl-Anwendungen in industriellen Prozessen.

Die Kommunikation zwischen den physischen und virtuellen Feldgeräten erfolgt über das Datennetzwerk mittels eines speziell entwickelten Konvergenz-Protokolls. Dieses Protokoll basiert auf dem Industrial-Ethernet-Standard und etabliert eine sogenannte Application-Relationship zwischen den korrespondierenden Geräten.

In dieser AR-Struktur fungiert das virtuelle Feldgerät als Profinet-Controller, während das physische Feldgerät als Profinet-Device konfiguriert ist. Diese Konfiguration ermöglicht eine klare Rollenverteilung und effiziente Kommunikation zwischen den Ebenen.

Die Application-Relationship umfasst mindestens zwei Communication Relationships (CRs) für den Austausch zyklischer I/O-Daten sowie Record-Kommunikation, die für die Übertragung azyklischer Daten genutzt wird.

Die physischen Feldgeräte sind mit verschiedenen Kommunikationsmitteln ausgestattet:
1. Ein Datennetzwerk-Kommunikations-Mittel für die Interaktion mit dem Ethernet-Netzwerk.
2. Ein Interprozess-Kommunikations-Mittel für die interne Datenverarbeitung.
3. Ein Rückwand-Bus-Kommunikations-Mittel für die Interaktion mit den Modulen.

Das Datennetzwerk-Kommunikations-Mittel enthält einen speziellen Feldgeräte-Bus-Stellvertreter, der die Aufgabe hat, verschiedene Datenformate anzupassen und zu konvertieren.

Die virtuellen Feldgeräte verfügen über entsprechende virtuelle Komponenten, die den Funktionen der physischen Geräte nachempfunden sind. Zusätzlich besitzen sie einen virtuellen Vermittlungs-Knoten und einen virtuellen Feldgeräte-Bus-Stellvertreter mit einer integrierten Datenweiche. Diese Komponenten ermöglichen eine flexible und effiziente Datenverarbeitung und -weiterleitung innerhalb der virtuellen Umgebung.

Der Datenaustausch zwischen physischen und virtuellen Feldgeräten folgt einem definierten Kommunikationspfad. Die zu übertragenden Daten werden in spezielle Profinet-Frames (für zyklische Daten) oder Profinet-Acyclic-Frames (für azyklische Daten) gekapselt und über das Datennetzwerk transportiert.

Ein weiteres wichtiges Merkmal ist die Speicherung von Konfigurations-Daten der physischen Feldgeräte auf ihren virtuellen Pendants. Diese Daten können bei Bedarf über das Konvergenz-Protokoll an die physischen Geräte übermittelt werden, was eine zentrale Verwaltung und schnelle Rekonfiguration ermöglicht.

Insgesamt ermöglicht das Konvergenz-Protokoll eine bidirektionale Echtzeitkommunikation zwischen den physischen und virtuellen Feldgeräten über die etablierte Application-Relation-ship. Dies führt zu einer nahtlosen Integration von IT- und OT-Ebene, verbessert die Flexibilität und Effizienz der Automatisierungsanordnung und eröffnet neue Möglichkeiten für fortschrittliche Steuerungs- und Überwachungsfunktionen in industriellen Umgebungen.

Gemäß dem zuvor gesagten erhält man eine Automatisierungsanordnung, umfassend: Eine IT-Ebene, in welcher mittels einer IT-Infrastruktur, eine Verarbeitung, Erstellung, Speicherung, ein Austausch und ein Abrufen von Daten realisiert ist, eine OT-Ebene, in welcher mittels Automatisierungskomponenten eine Überwachung und eine Steuerung von industriellen Prozessen realisiert ist,
ein Datennetzwerk auf Ethernet-Basis, welche für eine Kommunikation zwischen der IT-Ebene und der OT-Ebene ausgestaltet und angeordnet ist, wobei mindesten eine Automatisierungskomponente als ein Feldgerät ausgestaltet ist und ein Feldgerät mindestens ein Modul aufweist, wobei das oder die Module über einen Feldgeräte-Bus untereinander und mit dem Feldgerät kommunizieren, dabei ist in der IT-Infrastruktur zumindest zu einem Teil der physischen Feldgeräte in der OT-Ebene je ein virtuelles Feldgerät in der IT-Ebene zugeordnet ist, wobei die einander zugeordneten physischen Feldgeräte und die virtuellen Feldgeräte ausgestaltet sind über das Datennetzwerk mit einem Konvergenz-Protokoll zu kommunizieren.

Dabei weist ein physisches Feldgerät folgende Komponenten auf ein Datennetzwerk-Kommunikations-Mittel, ein Interprozess-Kommunikation-Mittel und ein Rückwand-Bus-Kommunikations-Mittel, wobei das Datennetzwerk-Kommunikations-Mittel zum einen ausgestaltet ist auf dem Datennetzwerk Informationen auszutauschen und zum anderen einen Feldgeräte-Bus-Stellvertreter aufweist, welcher mit einem Konvergenz-Protokoll-Mittel ausgestaltet ist Datensätze in Telegrammen aus dem Konvergenz-Protokoll an verschiedener Datenformate des Rückwand-Bus-Kommunikations-Mittels anzupassen, wobei das Interprozess-Kommunikations-Mittel ausgestaltet ist einen bidirektionalen Informationsaustausch zwischen dem Datennetzwerk-Kommunikations-Mittel und dem Rückwand-Bus-Kommunikations-Mittel durchzuführen, das Rückwand-Bus-Kommunikations-Mittel ist weiterhin ausgestaltet für die Kommunikation und mit den Modulen über den Feldgeräte-Bus.

Im Gegenzug weist ein virtuelles Feldgerät folgende Komponenten auf. Ein virtuelles Datennetzwerk-Kommunikations-Mittel, ein virtuelles Interprozess-Kommunikation-Mittel und ein virtuelles Konvergenz-Protokoll-Mittel, wobei das virtuelle Datennetzwerk-Kommunikations-Mittel zum einen ausgestaltet ist auf dem Datennetzwerk Informationen auszutauschen und zum anderen auf dem Datennetzwerk Informationen mit dem physischen Feldgerät auszutauschen und zusätzlich einen virtuellen Vermittlungs-Knoten aufweist, welcher über einen virtuellen Kommunikationskanal mit dem virtuellen Konvergenz-Protokoll-Mittel in Verbindung steht und weiterhin einen virtuellen Feldgeräte-Bus-Stellvertreter aufweist, welcher mit einer Datenweiche ausgestaltet ist, wobei das virtuelle Interprozess-Kommunikations-Mittel ausgestaltet ist einen bidirektionalen Informationsaustausch zwischen dem virtuellen Datennetzwerk-Kommunikations-Mittel und dem virtuellen Konvergenz-Protokoll-Mittel durchzuführen, wobei die Komponenten derart zusammenwirken und ausgestaltet sind, das Datensätze in Telegrammen von den physischen Feldgerät folgenden Kommunikationspfad nehmen: ankommend in dem virtuellen Datennetzwerk-Kommunikations-Mittel über den Vermittlungs-Knoten in den virtuellen Kommunikationskanal und schließlich in das virtuelle Konvergenz-Protokoll-Mittel, welches ausgestaltet ist Datensätze aus den Telegrammen des Konvergenz-Protokoll an verschiedener Datenformate von Feldbusprotokollen anzupassen.

Als großer Vorteil wird es angesehen, dass die gekoppelten physischen Feldgeräte in der OT-Ebene, also beispielsweise ein physisches dezentrales Ethernet-Device vom Typ ET200 IM der Firma Siemens, eine reduzierte Softwarekomplexität aufweisen, da komplexere Kommunikations- und Datenverarbeitungsaufgaben von der virtuellen dezentrale Ethernet-Device-Instanz übernommen werden.

Kommuniziert nun so ein gekoppeltes Ethernet-Device vom Typ ET200 IM nach dem Profinetprinzip mit dem entprechenden virtuellen Device, wird der Weg, den ein Telegramm in einem Profinet-Netzwerk nimmt, auch als "Kommunikationspfad" oder "Datenpfad" bezeichnet. In einem industriellen Automatisierungsnetzwerk wie Profinet beschreibt der Kommunikationspfad die Route, die Datenpakete oder Telegramme von der Quelle (z.B. einer Steuerungseinheit oder einem Controller) zum Ziel (z.B. einem Feldgerät oder Aktuator) durch das Netzwerk nehmen. Dieser Pfad kann verschiedene Netzwerkkomponenten wie Switches, Router und andere Netzwerkgeräte umfassen, die die Weiterleitung der Telegramme ermöglichen.

In einer typischen Profinet-Kommunikation sind folgende Elemente und Begriffe wichtig: Controller, hier das virtuelle Konvergenz-Protokoll-Mittel im virtuellen Device: Das zentrale Steuergerät, das die Kommunikation und Steuerung der Feldgeräte übernimmt.

Device: Die Feldgeräte oder Endgeräte, die mit dem Controller kommunizieren.

D. h. der Device-Prozess ist (aus Profinet-Sicht) eine Profinet-Device-Instanz, der IT/OTconv-Prozess ist (aus Profinet-Sicht) eine Profinet-Controller-Instanz, die mit genau einem "IT/OTconv-Device" (gekoppeltes physisches ET200 IM) kommuniziert.

Switches: Netzwerkknoten, die die Weiterleitung der Datenpakete zwischen den verschiedenen Geräten im Netzwerk übernehmen.

Profinet-Telegramme: Die Datenpakete, die die Steuerbefehle, Statusinformationen und andere Daten enthalten.

Der Kommunikationspfad ist entscheidend für die Echtzeitfähigkeit und Zuverlässigkeit des Profinet-Systems, da er die Effizienz und Geschwindigkeit der Datenübertragung beeinflusst.

Im Sinne der Erfindung ist ein IT/OT-konvergentes Gerät ist mit einer Technologie ausgestattet, die darauf abzielt, die beiden traditionell getrennten Welten der Informationstechnologie (IT) und der Betriebstechnologie (OT) zu integrieren. Diese Integration zielt darauf ab, die Effizienz, Sicherheit und Interoperabilität in industriellen Automatisierungs- und Steuerungssystemen zu verbessern. Hier sind einige grundlegende Aspekte eines IT/OTkonvergenten Geräts:
Integration von IT und OT:
IT (Information Technology) umfasst Technologien und Systeme, die zur Verwaltung und Verarbeitung von Daten verwendet werden, wie z. B. Netzwerke, Server, Datenbanken und Software-Anwendungen.

OT (Operational Technology) bezieht sich auf Hardware und Software, die zur Überwachung und Steuerung physischer Geräte und Prozesse in industriellen Umgebungen eingesetzt werden, wie z. B. SPS (Speicherprogrammierbare Steuerungen), SCADA-Systeme (Supervisory Control and Data Acquisition) und Feldgeräte. Kommunikationsschnittstellen:
IT/OT-konvergente Geräte bieten Schnittstellen und Protokolle, die eine nahtlose Kommunikation zwischen IT-Systemen und OT-Geräten ermöglichen. Dies kann durch die Verwendung standardisierter Protokolle wie Profinet, OPC UA oder MQTT erreicht werden.

### Datenintegration und -management:

Diese Geräte ermöglichen die Sammlung, Verarbeitung und Analyse von Daten sowohl aus der IT- als auch aus der OT-Welt. Dadurch können Unternehmen fundierte Entscheidungen treffen, die auf einer umfassenderen Datenbasis beruhen.

### Sicherheitsaspekte:

IT/OT-Konvergenz erfordert robuste Sicherheitsmechanismen, um die Integrität und Vertraulichkeit der Daten zu gewährleisten. Dies kann durch Verschlüsselung, Zugriffskontrollen und andere Sicherheitsprotokolle erreicht werden.

### Vorteile:

Effizienzsteigerung: Durch die Integration von IT- und OT-Systemen können Unternehmen ihre Prozesse optimieren und die Betriebseffizienz steigern.

Bessere Entscheidungsfindung: Durch die Zusammenführung von IT- und OT-Daten können Unternehmen umfassendere und genauere Einblicke in ihre Betriebsabläufe gewinnen.

Kosteneinsparungen: Die Reduzierung der Komplexität und der Wartungsanforderungen kann zu erheblichen Kosteneinsparungen führen.

Ein konkretes Beispiel für ein IT/OT-konvergentes Gerät ist das in Ihrer Erfindungsmeldung beschriebene "IT/OTconv-Device". Dieses Gerät integriert physische dezentrale Ethernet-Devices und virtuelle dezentrale Ethernet-Devices über ein spezielles Protokoll (IT/OTconv-Protokoll), um eine konsistente und sichere Kommunikation zwischen IT- und OT-Ebenen zu ermöglichen.

Im Sinne der Erfindung sind Virtuelle Devices softwarebasierte Repräsentationen physischer Geräte, die in einer virtuellen Umgebung betrieben werden. In der IT/OT-Konvergenz spielen virtuelle Devices eine zentrale Rolle, da sie die Brücke, zwischen der IT- und der OT-Welt schlagen. Sie bieten eine Reihe von Vorteilen gegenüber rein physischen Geräten, insbesondere hinsichtlich Flexibilität, Skalierbarkeit und Wartung.

### Softwarebasierte Implementierung:

Virtuelle Devices sind vollständig in Software implementiert und laufen auf virtuellen Maschinen (VMs) oder in Container-Umgebungen, die auf Standard-IT-Infrastrukturen wie Servern oder Cloud-Plattformen gehostet werden.

### Virtuelle Repräsentation:

Sie repräsentieren die Funktionalität und die Schnittstellen physischer Geräte, ohne dass die eigentliche Hardware vorhanden sein muss. Dadurch können sie dieselben Aufgaben wie ihre physischen Gegenstücke erfüllen.

### Kopplung mit physischen Devices:

Virtuelle Devices sind eng mit physischen Geräten gekoppelt. In Ihrem Fall verbindet das IT/OTconv-Protokoll die virtuellen dezentralen Ethernet-Devices (ET200V IM) mit den physischen dezentralen Ethernet-Devices (ET200 IM).

### Engineering und Konfiguration:

Alle notwendigen Engineering-Daten und Konfigurationsinformationen werden in den virtuellen Devices gespeichert und verwaltet. Diese Daten werden bei Bedarf an die physischen Geräte übermittelt.

### Datenverarbeitung und -weiterleitung:

Virtuelle Devices können komplexe Datenverarbeitungsaufgaben übernehmen und die verarbeiteten Daten an die physischen Geräte weiterleiten oder in der IT/OT-Ebene zur Verfügung stellen.

### Skalierbarkeit und Flexibilität:

Da sie in einer virtuellen Umgebung laufen, können virtuelle Devices leicht skaliert werden, um den Anforderungen zu entsprechen. Dies ist insbesondere in Cloud-Umgebungen von Vorteil, wo zusätzliche Ressourcen bei Bedarf dynamisch bereitgestellt werden können.

### Kommunikationsschnittstelle:

Die virtuellen Devices (ET200V IM) agieren als zentrale Kommunikationsschnittstelle zur IT/OT-Ebene. Sie ermöglichen den Datenaustausch zwischen IT-Systemen (z.B. ERP-Systeme, Cloud-Anwendungen) und OT-Geräten (z. B. PLCs in der OT-Ebene).

### Beim Einsatz als Profinet-Controller:

In Ihrem IT/OTconv-Device agieren die virtuellen Devices als Profinet-Controller, die eine Profinet-AR (Application Relationship) mit den physischen Devices (ET200 IM) aufbauen und aufrechterhalten.

### Datenmanagement:

Die virtuellen Devices speichern alle relevanten Engineering-Daten und stellen sicher, dass diese Daten konsistent und aktuell sind. Sie übernehmen auch die Aufgabe der Datenvorverarbeitung und -aggregation.

### Reduzierung der physischen Gerätekomplexität:

Durch die Verlagerung komplexer Funktionen und Kommunikationsaufgaben auf die virtuellen Devices wird die Softwarekomplexität der physischen Devices reduziert. Dies führt zu weniger Wartungsaufwand und geringeren Hardwareanforderungen an die physischen Geräte.

Als großer Vorteil werden eine reduzierte Hardwareanforderung und ein geringerer Wartungsaufwand für physische Geräte gesehen.

### Definitionen

Eine Profinet-AR (Application Relation) ist ein zentrales Konzept in der Profinet-Kommunikation. Sie stellt eine logische Verbindung zwischen zwei Profinet-Geräten dar, die zur Übertragung von Daten und zur Synchronisation von Anwendungen genutzt wird. Diese Verbindung wird während der Initialisierung des Kommunikationsprozesses aufgebaut und verwaltet.

### Wichtige Punkte zu Profinet-AR:

Verbindungsaufbau: Eine AR wird typischerweise während der Inbetriebnahmephase eines Profinet-Systems erstellt. Dies geschieht durch den Austausch von Konfigurationsdaten und das Einrichten von Kommunikationsparametern zwischen den beteiligten Geräten.

Kommunikationsqualität: Eine AR kann unterschiedliche Kommunikationsarten, wie Real-Time (RT) und Isochronous Real-Time (IRT)verwenden. Dadurch werden verschiedene Varianten von Datentransfer mit unterschiedlichen Prioritäten und Zeitanforderungen ermöglicht.

Daten- und Steuerkanäle: Eine AR kann sowohl für den zyklischen Datenaustausch (Prozessdaten) als auch für azyklische Kommunikation (Diagnose- und Parameterdaten) verwendet werden.

AR-Parameter: Die AR enthält verschiedene Parameter, wie die Identifikation der Partnergeräte, die Art der übertragenen Daten, Zykluszeiten und Prioritäten. Diese Parameter werden während der Initialisierung festgelegt und können während der Laufzeit überwacht und gegebenenfalls angepasst werden.

Redundanz und Fehlertoleranz: Profinet-AR kann auch Mechanismen zur Erhöhung der Systemzuverlässigkeit und Fehlertoleranz beinhalten, zum Beispiel durch die Unterstützung von redundanten Verbindungen.

Ressourcenverwaltung: Das Management von ARs umfasst auch die Verwaltung der Ressourcen in den beteiligten Geräten, um sicherzustellen, dass die Kommunikation effizient und zuverlässig abläuft.

Das Konzept der Profinet-AR ermöglicht eine flexible und leistungsfähige Kommunikation in industriellen Automatisierungsnetzwerken, indem es eine klare Struktur und definierte Mechanismen für den Datenaustausch und die Synchronisation bereitstellt.

Profinet-AR (Application Relation) enthält eine Output-CR (Communication Relation) und eine Input-CR. In der Profinet-Kommunikation wird eine Application Relation (AR) verwendet, um die logische Verbindung zwischen zwei Geräten zu definieren und zu verwalten, und innerhalb dieser AR gibt es spezifische Communication Relations (IOCRs), die die eigentlichen Kommunikationskanäle für zyklische IO-Daten darstellen.

Gekoppelte physische Devices sind hardwarebasierte Geräte, die in einer industriellen Umgebung installiert sind und direkt mit den Prozessdaten (Sensoren, Aktoren, etc.) interagieren. Sie dienen als Bindeglied zwischen der physischen Prozessebene und der IT/OT-Ebene durch Verwendung des IT/OTconv-Protokolls.

Die physischen Devices sammeln, verarbeiten und senden Prozessdaten (Eingangs- und Ausgangsdaten) von und zu den angeschlossenen Sensoren und Aktoren. Sie enthalten einen Rückwandbus-Prozess, der den Datenfluss zwischen den verschiedenen Elektronikmodulen und der Hauptsteuerung innerhalb des Geräts steuert.

Datenkonvertierung: Der Device-Prozess im virtuellen Device übernimmt die Konvertierung und Anpassung der Datenformate zwischen dem Rückwandbus und den unterschiedlichen Feldbusprotokollen (z.B. Profinet, EtherNet/IP, Modbus TCP).

Systemarchitektur: Device-Prozess im virtuellen Device: Dieser Prozess umfasst die Hardware- und Softwarekomponenten, die für die Kommunikation über verschiedene Feldbustypen mit SPS-Steuerungen (Virtual-/Hardware-PLC_x) unterschiedlicher Hersteller zuständig sind.

Rückwandbus-Prozess: Dieser Prozess steuert den Rückwandbus und ermöglicht den Datenaustausch mit den angeschlossenen Elektronikmodulen.

Interprozess-Kommunikation: Es gibt einen bidirektionalen Informationsaustausch zwischen dem Device-Prozess und dem Rückwandbus-Prozess. Dieser Austausch umfasst Konfigurationsdaten, zyklische I/O-Daten und dynamische Ereignisse (z.B. Ziehen/Stecken von Modulen).

### Vorteile:

Reduzierte Software-Komplexität: Da viele der komplexen Kommunikations- und Datenverarbeitungsaufgaben in das virtuelle Device ausgelagert werden, wird die Software-Komplexität der physischen Devices reduziert. Dies führt zu einer geringeren Häufigkeit von Software-Updates und einem geringeren Wartungsaufwand der physischen Devices.

Profinet-Records: Für den Austausch azyklischer Daten, wie Konfigurations- und Diagnosedaten, werden Profinet-Records verwendet. Die Initiative für den Datenaustausch geht immer vom virtuellen Device aus, das Datensatz-Schreiben- oder Datensatz-Lesen-Telegramme sendet.

Polling und Statussignalisierung: Das virtuelle Device kann zyklische Datensatz-Lesen-Telegramme verwenden, um zu prüfen, ob neue azyklische Daten verfügbar sind. Alternativ kann das physische Device im Eingangsdatentelegramm ein Statuselement liefern, das signalisiert, dass neue azyklische Informationen vorliegen.

Aufgaben des Feldgeräte-Bus-Stellvertreter bzw. des Rückwandbus-Proxy:

### Datenkonvertierung:

Protokollkonvertierung: Der Rückwandbus-Proxy ist verantwortlich für die Konvertierung der Datenformate zwischen den verschiedenen Feldbus-Protokollen (z. B. Profinet, EtherNet/IP, Modbus TCP) und dem Rückwandbus-Protokoll. Dies stellt sicher, dass die Daten in einem korrekten Format für beide Seiten vorliegen.

Datenformatierung: Konvertiert komplexe Datenstrukturen, die von den SPS-Steuerungen (Virtual-/Hardware-PLC_x) über verschiedene Feldbussysteme kommen, in ein Format, das vom Rückwandbus erwartet wird.

Bidirektionaler Informationsaustausch zwischen physischem und virtuellen Device: Eingangsdaten: virtuelles Device empfängt zyklische Eingangsdaten von den Elektronikmodulen (EM_x) und leitet diese an den Device-Prozess weiter.

Ausgangsdaten: Virtuelles Device sendet zyklische Ausgangsdaten vom Device-Prozess an die entsprechenden Elektronikmodule (EM_x) über den Rückwandbus. Konfigurationsdaten: Handhabt die Konfigurations- und Parametrierungsdaten der Elektronikmodule, sowohl in Richtung der Feldbusse als auch in Richtung des Rückwandbusses.

Ereignisdaten: Verarbeitet dynamische Ereignisse wie das Einstecken oder Ziehen von Elektronikmodulen und verschiedene Alarm-Telegramme, und leitet diese Informationen entsprechend weiter.

### Konsistenzsicherung:

Datenintegrität: Stellt sicher, dass die Daten, die zwischen Device- und Rückwandbus-Prozess ausgetauscht werden, konsistent und synchron sind.

Synchronisation: Verwendet Mechanismen zur Synchronisation der Daten zwischen den verschiedenen Prozessen, um eine einheitliche und aktuelle Datenlage zu gewährleisten.

### Kommunikationssteuerung:

Prozesskoordination: Koordiniert die Kommunikation zwischen den verschiedenen Prozessen, um sicherzustellen, dass die richtigen Daten zur richtigen Zeit an den richtigen Ort gelangen.

Fehlerbehandlung: Handhabt Kommunikationsfehler und stellt Mechanismen zur Wiederherstellung der Kommunikation bereit.

### Ressourcenmanagement:

Speicherverwaltung: Verwalten der Speicherressourcen, die für die Datenkonvertierung und -speicherung benötigt werden.

Leistungsoptimierung: Optimiert die Leistung durch effiziente Nutzung der verfügbaren Ressourcen.

Der Feldgeräte-Bus-Stellvertreter bzw. der Rückwandbus-Proxy ist ein essenzieller Bestandteil der Systemarchitektur eines physischen Feldgerätes bzw. des ET200 IM. Seine Hauptaufgaben umfassen die Konvertierung und Synchronisation von Daten zwischen verschiedenen Protokollen und Prozessen, die Sicherstellung der Datenintegrität und - konsistenz, die Steuerung der Kommunikation und das Ressourcenmanagement. Durch die Erfüllung dieser Aufgaben ermöglicht der Rückwandbus-Proxy einen reibungslosen und effizienten Betrieb des Gesamtsystems.

### Aufgabe des Rückwandbus-Proxys im Detail:

### Datenkonvertierung zwischen Feldbus und Rückwandbus:

Protokollkonvertierung: Der Rückwandbus-Proxy konvertiert die Datenformate zwischen den verschiedenen Feldbus-Protokollen (z. B. Profinet, EtherNet/IP, Modbus TCP) und dem Rückwandbus-Protokoll. Dies bedeutet, dass der Rückwandbus-Proxy Daten, die über den Feldbus ankommen, in ein Format umwandelt, das der Rückwandbus erwartet, und umgekehrt.

Beispiel: Wenn Daten über Modbus TCP eintreffen, konvertiert der Rückwandbus-Proxy diese Daten in ein Rückwandbus-kompatibles Format, das dann an die entsprechenden Elektronikmodule (EM_x) weitergeleitet wird.

### Bidirektionaler Informationsaustausch:

Eingangsdaten: Empfängt zyklische Eingangsdaten von den Elektronikmodulen (EM_x) und leitet diese an den Device-Prozess weiter.

Ausgangsdaten: Sendet zyklische Ausgangsdaten vom Device-Prozess an die entsprechenden Elektronikmodule (EM_x) über den Rückwandbus.

Konfigurations- und Parametrierungsdaten: Handhabt die Konfigurations- und Parametrierungsdaten der Elektronikmodule, sowohl in Richtung der Feldbusse als auch in Richtung des Rückwandbusses.

### Rolle des Konvergenz-Protokolls:

Das Konvergenz-Protokoll bzw. das IT/OTconv-Protokoll kommt ins Spiel, wenn es darum geht, die Daten zwischen dem physischen ET200 IM und der virtuellen Instanz (ET200V IM) auszutauschen. Nach dem neuen Modell wird die Übermittlung der Daten durch das Konvergenzprotokoll ermöglicht. Hier sind die Schritte im Zusammenhang mit dem IT/OTconv-Protokoll:
Kommunikation zwischen physischem und virtuellem ET200 IM:
IT/OTconv-Protokoll: Dient als Kommunikationsmittel zwischen dem physischen ET200 IM und dem virtuellen ET200V IM. Die Daten, die der Rückwandbus-Proxy aufbereitet und an den Device-Prozess weitergibt, werden anschließend vom IT/OTconv-Prozess übernommen und über das IT/OTconv-Protokoll an das virtuelle ET200V IM übertragen.

Datenfluss im IT/OTconv-Protokoll:
Eingangsdaten: Zyklische Eingangsdaten, die vom Rückwandbus-Proxy konvertiert und zum Device-Prozess weitergeleitet wurden, werden über das IT/OTconv-Protokoll an das virtuelle ET200V IM gesendet.

Ausgangsdaten: Zyklische Ausgangsdaten, die vom virtuellen ET200V IM über das IT/OTconv-Protokoll an das physische ET200 IM gesendet werden, werden vom IT/OTconv-Prozess an den Device-Prozess und dann an den Rückwandbus-Proxy weitergeleitet, der sie an die entsprechenden Elektronikmodule (EM_x) verteilt.

Der Rückwandbus-Proxy konvertiert die Daten zwischen den verschiedenen Feldbus-Protokollen (z. B. Modbus TCP) und dem Rückwandbus-Protokoll innerhalb des physischen ET200 IM. Die eigentliche Kommunikation zwischen dem physischen ET200 IM und dem virtuellen ET200.

Aufgaben und Funktionen der Datenweiche:
Die "Datenweiche" im Kontext der beschriebenen Systemarchitektur spielt eine wichtige Rolle bei der Verarbeitung und Verteilung der Daten innerhalb des physischen ET200 IM. Hier ist eine detaillierte Erklärung ihrer Aufgaben und Funktionen:

### Verteilung der Datenströme:

Zyklische I/O-Daten: Die Datenweiche sorgt dafür, dass zyklische Ein- und Ausgangsdaten, die vom Rückwandbus-Prozess kommen, korrekt an den Device-Prozess weitergeleitet werden. Diese Daten können verschiedene Quellen und Ziele innerhalb des Systems haben.

Azyklische Daten: Neben zyklischen Daten verwaltet die Datenweiche auch azyklische Daten, wie Konfigurations- und Parametrierungsdaten, sowie dynamische Ereignisse (z. B. Alarm-Telegramme).

### Richtungssteuerung der Daten:

Von Feldbus zu Rückwandbus: Die Datenweiche leitet Daten, die von den Feldbus-Systemen (z. B. Profinet, EtherNet/IP, Modbus TCP) ankommen, an den Rückwandbus-Prozess weiter. Diese Daten müssen möglicherweise konvertiert und im richtigen Format bereitgestellt werden.

Von Rückwandbus zu Feldbus: Ebenso leitet die Datenweiche Daten, die vom Rückwand-bus-Prozess kommen, an die entsprechenden Feldbus-Systeme weiter. Dies kann zyklische I/O-Daten oder azyklische Statusinformationen betreffen.

### Datenkonsistenz und Synchronisation:

Konsistente Datenübertragung: Die Datenweiche stellt sicher, dass die Daten konsistent und synchron zwischen den verschiedenen Prozessen (Device-Prozess und Rückwand-bus-Prozess) übertragen werden. Dies ist besonders wichtig, um die Integrität der Daten zu gewährleisten.

Synchronisation: Die Datenweiche hilft bei der Synchronisation der Daten zwischen den verschiedenen Kommunikationskanälen und sorgt dafür, dass alle Prozesse auf dem gleichen Stand sind.

### Datenkonvertierung:

Interne Konvertierung: Die Datenweiche übernimmt die Aufgabe, komplexe Datenstrukturen zwischen den verschiedenen Protokollen und Prozessen innerhalb des physischen ET200 IM zu konvertieren. Dies kann die Anpassung von Datenformaten oder die Umwandlung von Protokollen umfassen.

### Fehlerbehandlung und Diagnose:

Fehlererkennung: Die Datenweiche kann Fehler in den Datenströmen erkennen und entsprechende Maßnahmen einleiten, um diese zu beheben.

Diagnoseinformationen: Sie kann auch Diagnoseinformationen bereitstellen, die dabei helfen, Probleme im System zu identifizieren und zu beheben.

### Zusammenhang mit dem Konvergenz-Protokoll:

Die Datenweiche operiert innerhalb des physischen ET200 IM wie folgt; für die Kommunikation über das IT/OTconv-Protokoll

Vorbereitung der Daten für das Konvergenz-Protokoll,
Konsolidierung der Daten, die Datenweiche konsolidiert und formatiert die Daten, die vom Rückwandbus-Prozess kommen, damit sie über das Konvergenz-Protokoll an das virtuelle ET200V IM übertragen werden können.

Die Erfindung wird nun anhand eines Ausführungsbeispiels in der Zeichnung näher erläutert, es zeigen:
- FIG 1: eine schematische Darstellung einer Automatisierungsanordnung gemäß dem Stand der Technik,
- FIG 2: ein Systemdiagramm einer integrierten IT/OT-Architektur, die eine IT/OT-Ebene und eine OT-Ebene umfasst, gemäß der grundsätzlichen Idee,
- FIG 3: ein Systemdiagramm eines physischen Feldgeräts nach dem Stand der Technik,
- FIG 4: ein Systemdiagramm eines virtuellen Feldgeräts,
- FIG 5: ein Systemdiagramm eines gekoppelten physischen Feldgerätes,
- FIG 6: ein Blockdiagramm einer Adressierung und Parametrierung eines gekoppelten Feldgerätes im Kontext des Konvergenzprotokolls,
- FIG 7: ein virtuelles Feldgerät und ein gekoppeltes physisches Feldgerät bezüglich des Datenverkehres von Ausgans- und Eingangsdaten,
- FIG 8: ein virtuelles Feldgerät und ein gekoppeltes physisches Feldgerät bezüglich des Datenverkehres von Konfigurationsdaten
- FIG 9: ein virtuelles Feldgerät und ein gekoppeltes physisches Feldgerät bezüglich des Datenverkehres von Ereignisdaten,
- FIG 10: ein Blockdiagramm einer Kommunikation von Eingangsdaten- und Ausgangsdaten mittels Datenpuffer.

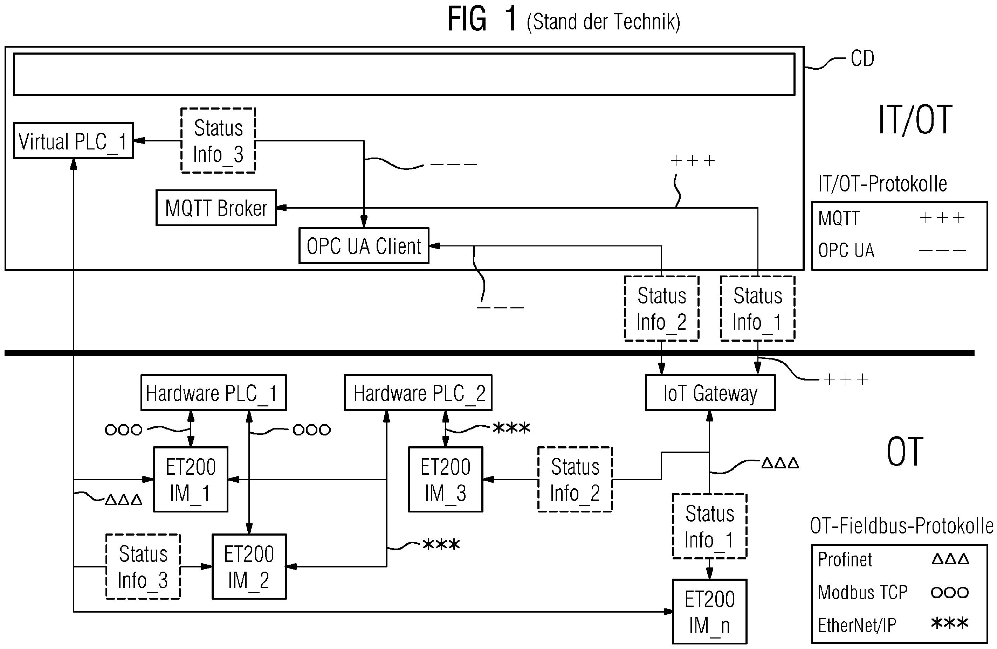

FIG 1 zeigt bisherige Ansätze, um die IT- und OT-Ebene miteinander zu koppeln. Stand der Technik ist, dass dezentrale Ethernet-Devices ET200 IM_x heute eine ganze Reihe verschiedener OT-Fieldbus-Protokolle unterstützen, um aus der Prozessebene die zyklischen Eingangs-Daten für SPS-Steuerungen, sei es eine virtuelle Steuerung oder sei es eine Hardware-Steuerung, unterschiedlicher Hersteller zugreifbar und für Automatisierungsaufgaben nutzbar zu machen. Die obere Ebene ist als Cloud- oder On Premise-Datacenter CD ausgestaltet. Dieser Abschnitt enthält virtuelle Komponenten, wie eine virtuelle SPS Virtual_PLC_1, einen MQTT-Broker und einen OPC UA-Client.

Weiterhin ist es nach dem Stand der Technik möglich, über genormte Ethernet-Telegramme (z. Bsp. Profinet-Records) eine breite Palette an Statusinformationen (z. Bsp. vorhandene Konfiguration, aktive Parametrierung, ...) aus den dezentralen Ethernet-Devices ET200 IM_x zu lesen. Soll ein Zugriff auf Statusinformationen (Status-Info_x) über Protokolle der IT/OT-Ebene erfolgen (z. Bsp. MQTT, OPC UA, ...), wird in der Regel nicht das dezentrale Ethernet-Device direkt angesprochen, sondern der Datenverkehr geht über ein loT Gateway oder die vorhandenen PLCs. Diese "Stellvertreter" liefern dann die eigentlichen Statusinformationen, der dezentralen Ethernet-Devices (ET200 IM_x), durch Nutzung der unterstützten OT-Fieldbus-Protokolle (z. Bsp. Lesen genormter Profinet-Records). Dabei wird durch die Ethernet-Devices keine Konsistenz von aktuellen Prozesswerten (zyklische I/O-Daten) und den über genormte Ethernet-Telegramme (z. Bsp. Profinet-Records) gelieferten Statusinformationen (Status-Info_x) garantiert.

Die FIG 1 zeigt auch verschiedene Kommunikationsprotokolle: IT/OT-Protokolle (MQTT = +++, OPC UA = ---) in der IT-Schicht und OT-Fieldbus-Protokolle (Profinet = Δ Δ Δ, Modbus TCP = ∘ ∘ ∘, EtherNet/IP = ***) in der OT-Schicht. Um an Statusinformationen zu gelangen ist ein loT-Gateway notwendig.

Die untere Hälfte zeigt die OT-Schicht, die Hardware-Komponenten wie Hardware-SPS PLC1, Hardware-SPS PLC2 und mehrere ET200IM_x Geräte (1 bis n) umfasst.

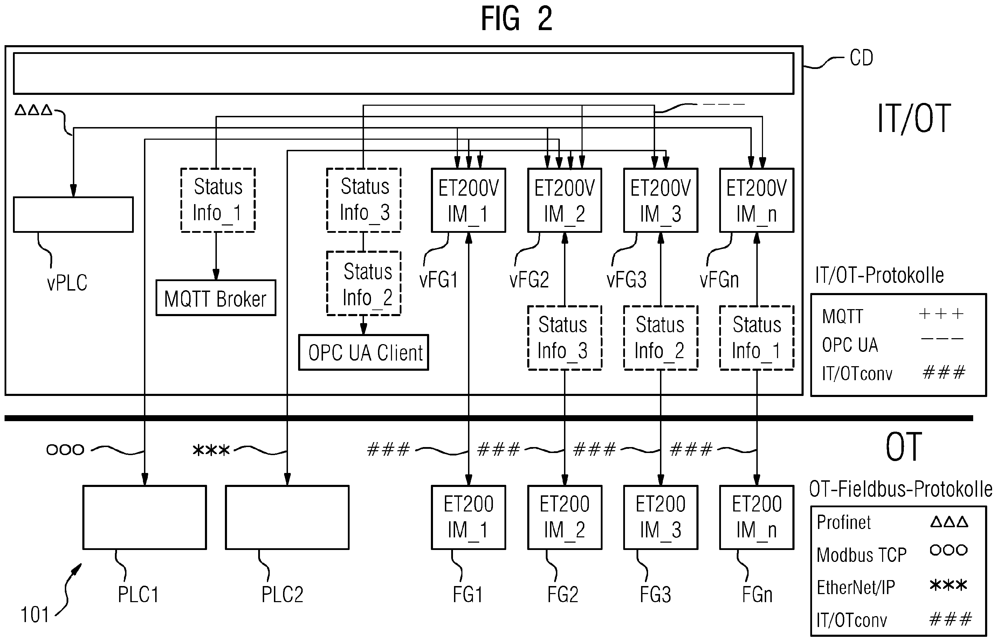

FIG 2 Diese Zeichnung veranschaulicht eine Systemarchitektur, die die IT- (Informationstechnologie) und OT- (Operational Technology) Ebenen zusammenführt. Die obere Hälfte des Bildes zeigt wieder das Cloud-Datencenter CD. Dieser Abschnitt enthält virtuelle Komponenten wie eine Virtuelle SPS, MQTT Broker, OPC UA Client und mehrere virtuelle ET200V IM (1 bis n) Geräte, welche den virtuellen Feldgeräten vFG1,..,vFG4 entsprechen. Die untere Hälfte zeigt die OT-Ebene, die Hardware-Komponenten, wie Hardware SPS PLC1, Hardware SPS PLC2 und mehrere ET200IM_x (1 bis n) Geräte, welche den physischen Feldgeräten FG1,...,FG4 entsprechen. Ein durchgestrichenes "loT Gateway" wird in der OT-Ebene gezeigt, was auf dessen Eliminierung in dieser Architektur hindeutet.

Die FIG 2 zeigt auch wieder die verschiedenen Kommunikationsprotokolle: MQTT = +++, OPC UA = ---, Profinet = Δ Δ Δ, Modbus TCP = ∘ ∘ ∘, EtherNet/IP = ***, wobei jetzt ein Konvergenz-Protokoll CP hinzugekommen ist, nämlich IT/OTconv = ###.

Die IT- und OT-Schichten sind durch den Austausch von Statusinformationen verbunden, dargestellt durch kleine Kästchen mit der Beschriftung "Status Info". Die Kommunikation zwischen den IT- und OT-Schichten mittels MQTT- und OPC UA-Protokollen, die in einer Legende oben rechts als "IT/OT-Protokolle" aufgeführt sind erfolgt direkt durch den Zugriff auf die virtuellen Feldgeräte vFG.

Dieses Diagramm veranschaulicht effektiv die Integration von IT- und OT-Systemen und zeigt, wie Daten zwischen dem Cloud-Datacenter CD und den Betriebsgeräten a in der Werkstatthalle fließen können.

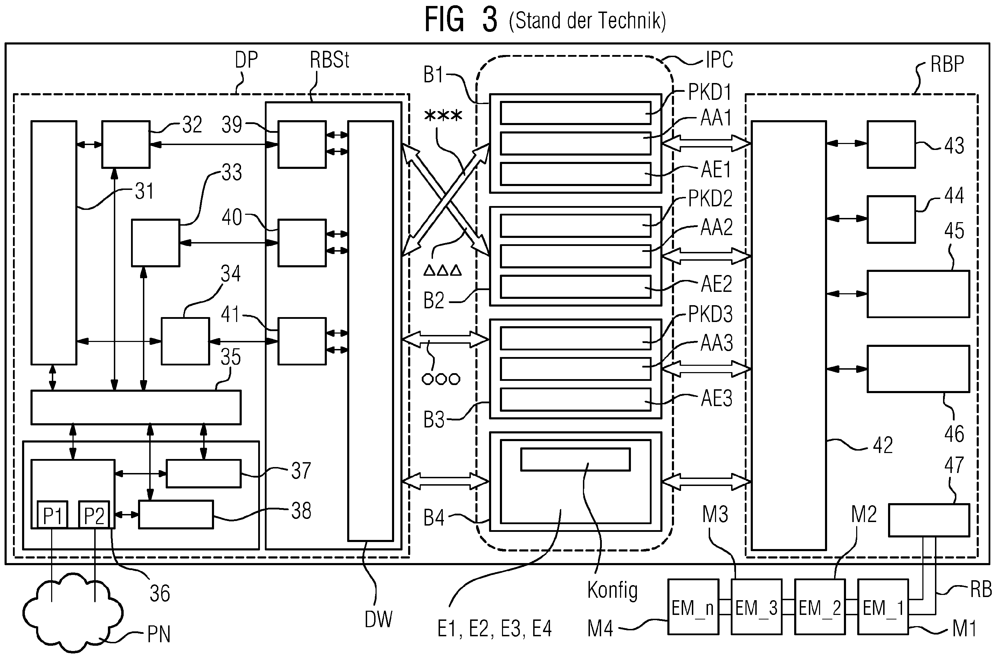

FIG 3 zeigt eine abstrahierte Systemarchitektur eines physischen Feldgerätes ET200 IMs (Stand der Technik). Es existiert eine klare Aufteilung zwischen einem Device- und einem Rückwandbus-Prozess.

Dabei beinhaltet der Device-Prozess prinzipiell die Hardware- und Software-Teile, um über verschiedene Feldbustypen (z. Bsp. Profinet, EtherNet/IP, Modbus TCP) mit SPS-Steuerungen (Virtual-/Hardware-PLC_x) unterschiedlicher Hersteller kommunizieren zu können.

Der Rückwandbus-Prozess beinhaltet alle Hardware- und Software-Teile, um den Rückwandbus zu steuern und mit den vorhandenen Elektronikmodulen EM_x bzw. M1,M2,M3,M4 Daten austauschen zu können.

Zwischen beiden Prozessen besteht ein bidirektionaler Informationsaustausch, nämlich eine Interprozess-Kommunikation. Dabei ist es die Aufgabe des Device-Prozesses, die eventuell notwendigen komplexen Datenkonvertierungen zwischen Feldbus- und Rückwandbus vorzunehmen (Rückwandbus-Proxy).

Typische Daten, die zwischen Device- und Rückwandbus-Prozess ausgetauscht werden, sind:
erste projektierte Konfiguration-Daten PKD1,
erste Aktuelle Ausgangsdaten AA1 und
erste Aktuelle Eingangsdaten AE1 für einen ersten Protokoll-Block B1.

Demnach weist das Feldgerät gemäß FIG 3, nämlich das physische ET200IM, ein Datennetzwerk-Kommunikations-Mittel DP auf, in diesem sind ein TCP-IP-Stack 31 angeordnet, welcher wiederum mit einem Profinet-Stack 32 in Verbindung steht. Weitere Protokolle werden durch einen Ethernet/IP-Stack 33 und einen MOD-Bus TCP-Stack 34 realisiert. Um eine Kommunikation über das Netzwerk PN zu ermöglichen, gibt es ein Ehternet-Interface 36, welches mit einem ersten Port P1 und einem zweiten Port P2 ausgestattet ist. Das Ethernet Interface 36 steht wiederum mit einem I/O-Frame-RAM 37 und einem Standard-Frame-RAM 38 in Verbindung. Dem Ethernet Interface 36 ist ein Ethernet-SoftwareTreiber 35 zugeordnet. Im Hinblick auf eine Profinet-Kommunikation bildet das Datennetzwerk-Kommunikations-Mittel DP einen "Device-Prozess". Innerhalb dieses Device-Prozesses, also des Datennetzwerk-Kommunikations-Mittels DP ist ein Feldgeräte-Bus-Stellvertreter RBSt angeordnet. Der Feldgeräte-Bus-Stellvertreter RBSt kann auch als "Rückwandbus-Proxy" betrachtet werden. Dieser enthält dann einen Datenbereich für Profinet-Data 39, einen Datenbereich für Ethernet/IP-Data 40 und einen Datenbereich für Modbus TCP-Data 41. Die genannten Datenbereiche stehen zum einen mit ihren entsprechenden Stacks 32,33,34 in Verbindung und zum anderen sind sie mit einer Datenweiche DW verbunden. Ein Interprozesskommunikations-Mittel IPC ermöglicht es nun, in einem ersten Bereich B1, einem zweiten Bereich B2, einem dritten Bereich B3 und in einem vierten Bereich B4 projektierte Konfigurationsdaten bzw. aktuelle Ausgangs-/Eingangsdaten entsprechend ihrer Protokolle weiterzugeben. Der erste Bereich B1 entspricht einem ersten Protokoll-Block B1 und enthält erste projektierte Konfigurationsdaten PKD1 für eine Ethernet/IP-Kommunikation. Neben den Konfigurationsdaten sind erste aktuelle Ausgangsdaten AE1 vorhanden.

In dem zweiten Protokoll-Block B2 sind Daten für die Profinet-Kommunikation vorhanden. Zunächst gibt es zweite projektierte Konfigurationsdaten PKD2 und zweite aktuelle Ausgangsdaten AA2 und zweite aktuelle Eingangsdaten AE2. Der dritte Protokoll-Block B3 weist Daten für die Modbus TCP Kommunikation auf, es existieren dafür dritte projektierte Konfigurationsdaten PKD3 und dritte aktuelle Ausgangsdaten AA3 bzw. dritte aktuelle Eingangsdaten AE3.

Der vierte Protokoll-Block B4 weist Konfigurationsdaten Konfig und Ereignisse E1,E2,E3,E4 auf.

Das Interprozess-Kommunikations-Mittel IPC steht mit einem Rückwand-Bus-Kommunikations-Mittel RBP in Verbindung. Das Rückwand-Bus-Kommunikations-Mittel RBP kann auch als "Rückwandbus-Prozess" bezeichnet werden. Um die Daten aus den genannten Protokoll-Blöcken bzw. den Bereichen B1,B2,B3,B4 entgegenzunehmen weist das Rückwand-Bus-Kommunikations-Mittel RBP einen Softwaretreiber 42 auf. Dieser Softwaretreiber 42 ist wiederum mit einem Steuerregister 43, einem Statusregister 44, einem Transfer-RAM 45 und einem IO-RAM 46 verbunden.

Damit das Rückwand-Bus-Kommunikations-Mittel RBP mit den Modulen M1,M2,M3,M4 kommunizieren kann, steht ein Bus-Interface 47 zur Verfügung.

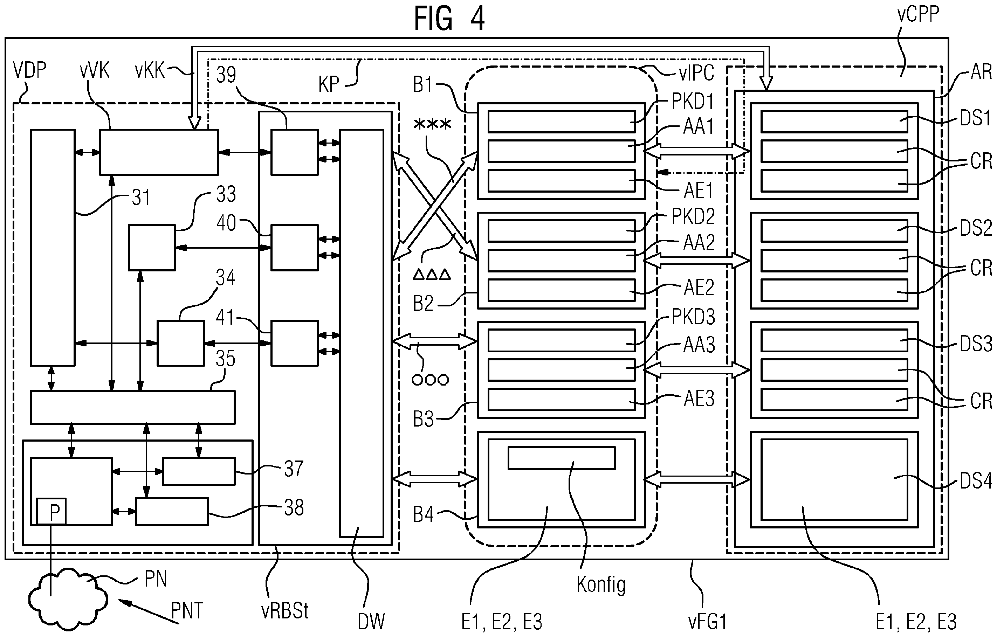

Gemäß FIG 4 ist nun ein virtuelles Feldgerät vFG1 dargestellt. Es weist folgende Komponenten auf, ein virtuelles Datennetzwerk-Kommunikations-Mittel vDP, ein virtuelles Interprozess-Kommunikations-Mittel vIPC und ein virtuelles Konfergenz-Protokoll-Mittel vCPP. Das virtuelle Datennetzwerk-Kommunikations-Mittel vDP, welches den Device-Prozess bei Profinetkommunikation realisiert, ist ausgestaltet auf dem Datennetzwerk PN Informationen mit einem physischen Feldgerät FG1 auszutauschen und zusätzlich weist dieses im Unterschied zum Stand der Technik einen virtuellen Vermittlungs-Knoten vVK auf. Die Besonderheit bei dem virtuellen Feldgerät VFG1 ist nun, dass der zusätzliche virtuelle Vermittlungs-Knoten vVK über einen virtuellen Kommunikationskanal vKK mit dem virtuellen Konvergenz-Protokoll-Mittel vCPP in Verbindung steht. In Analogie zu FIG 3 ist nun auch ein virtueller Feldgeräte-Bus-Stellvertreter vRBSt vorhanden. Er ist ebenfalls mit einer Datenweiche DW ausgestaltet und kommuniziert mit dem virtuellen Interprozess-Kommunikations-Mittel vIPC. Das virtuelle Interprozess-Kommunikations-Mittel vIPC ist ausgestaltet einen bidirektionalen Informationsaustausch zwischen dem virtuellen Datennetzwerk-Kommunikations-Mittel vDP und dem virtuellen Konvergenz-Protokoll-Mittel vCPP durchzuführen.

Die genannten Komponenten wirken dabei derart zusammen, dass Datensätze in einem Profinet-Telegramm PNT von den physischen Feldgeräten FG1,...,FG4 folgenden Kommunikations-Pfad KP nehmen: Ankommend in dem virtuellen Datennetzwerk-Kommunikations-Mittel vDP über den virtuellen Vermittlungs-Knoten vVK in den virtuellen Kommunikationskanal vKK und schließlich in das virtuelle Konvergenz-Protokoll-Mittel vCPP, welches ausgestaltet ist die Datensätze aus dem Profinet-Telegramm PNT des Konvergenz-Protokolls CP an die verschiedenen Datenformate der unterschiedlichen Feldbusprotokolle anzupassen und über vIPC dem vDP verfügbar zu machen.

Auf dem virtuellen Feldgerät vFG1 sind analog zu den Protokoll-Blöcken bzw. den Bereichen B1,B2,B3 und B4 ein erster Datensatz DS1, ein zweiter Datensatz DS2, ein dritter Datensatz DS3 und ein vierter Datensatz DS4 hinterlegt. Das bedeutet, auf dem virtuellen Feldgerät vFG1 sind Konfigurations-Daten Konfig der physischen Feldgeräte FG1,...,FG4 hinterlegt und diese können bei Bedarf an die physischen Feldgeräte FG1,...,FG4 über das Konvergenz-Protokoll CP übermittelt werden.

Insbesondere bei einer Ausgestaltung für eine Profinetkommunikation ist das Konvergenz-Protokoll CP mit einer Application-Relationsclip AR, also einer Profinet-AR-Struktur ausgestaltet. Dabei fungiert das virtuelle Feldgerät vFG1 als Profinet-Controller und das physische Feldgerät FG1 fungiert als Profinet-Device. Die Application-Relationsclip AR umfasst mindestens zwei Communication-Relationsclips CRs, nämlich für eine Output-Communications-Relationsclip OCR mit aktuellen Ausgangsdaten und eine Input-Communications-Relationsclip ICR mit aktuellen Eingangsdaten.

Mit anderen Worten erhält man gemäß FIG 4 nun eine neue Topologie mit einer funktionalen Aufteilung zwischen einem virtuellen Feldgerät und einem physischen Feldgerät. Der "Device-Prozess" im virtuellen Feldgerät hat immer noch die Hauptaufgabe über verschiedenen Feldbustypen, z.B. Profinet, Ethernet/IP, Modbus-TCP mit SPS-Steuerungen unterschiedlicher Hersteller kommunizieren zu können. An die Stelle eines herkömmlichen Rückwandbus-Prozesses tritt nun eine IT/OT Konvergenz-Prozess bzw. das virtuelle Konvergenz-Protokoll-Mittel vCPP. Dessen Aufgabe ist es nun, den bidirektionalen Informationsaustausch zwischen dem "Device-Prozess" und dem Rückwand-Prozess im gekoppelten physischen Feldgerät zu ermöglichen.
D.h. der Device-Prozess ist aus Profinet Sicht eine Profinet-Device Instanz, der IT/OT-Konvergenz-Prozess ist aus Profinet Sicht eine Profinet Controller Instanz, die mit genau einem IT/OT-Konvergenz-Device kommuniziert.

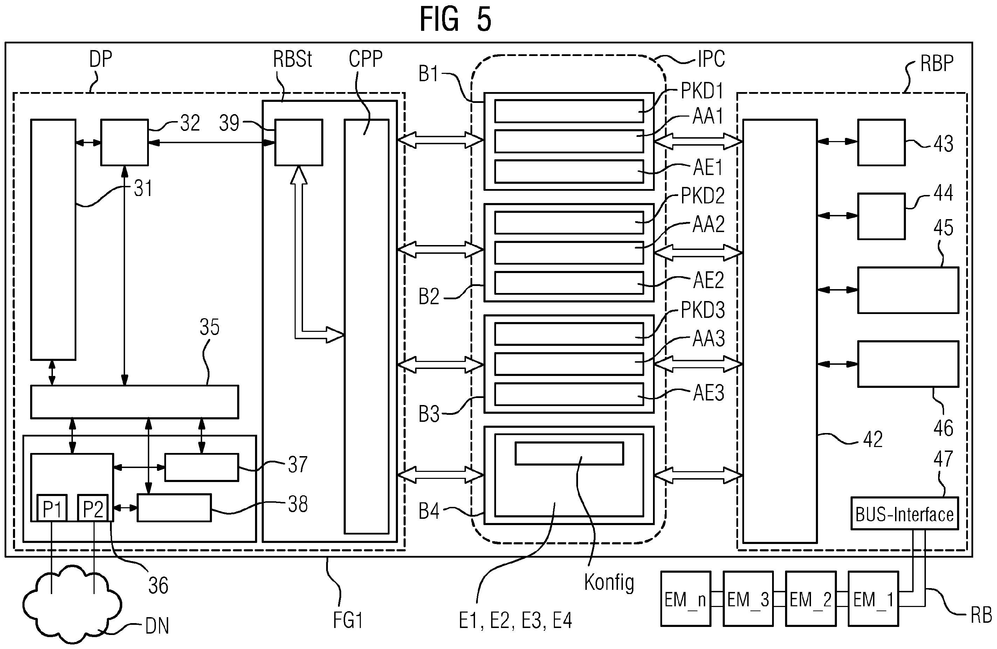

Mit der FIG 5 wird nun ein "abgespecktes" physisches Feldgerät FG1 vorgestellt. Im Gegensatz zu dem dargestellten Gerät gemäß FIG 3 weist das Gerät gemäß FIG 5 nur noch den Profinet Stack 32 bzw. die zugehörigen Profinet Data 39 auf. Der Feldgeräte-Bus-Stellvertreter RBSt hingegen weist nun anstelle der Datenweiche DW das Konvergenz-Protokoll-Mittel CPP auf.

Ausgehend davon, dass das Datennetzwerk-Kommunikations-Mittel DP als der Device-Prozess arbeitet, beschränkt sich die Funktion des Device-Prozesses nun darauf, mit dem virtuellen Feldgerät vFG1 (als Profinet-Controller) eine Profinet-AR (als Profinet Device) aufbauen zu können und dann in diesem Kontext den bidirektionalen Informationsaustausch konstistent mit dem Rückwandbusprozess zu ermöglichen. Da nun sehr viele Softwarekomponenten z.B. die Datenweiche DW und die unterschiedlichen Feldbusstacks z.B. Ethernet/IP Stack 33 und Modbus DCP-Stack 34 vom Device Prozess des physischen Feldgerätes hin zum Device Prozess des virtuellen Feldgerätes verschoben wurden, reduziert sich die Komplexität der Software im physischen Feldgerät FG1 deutlich.

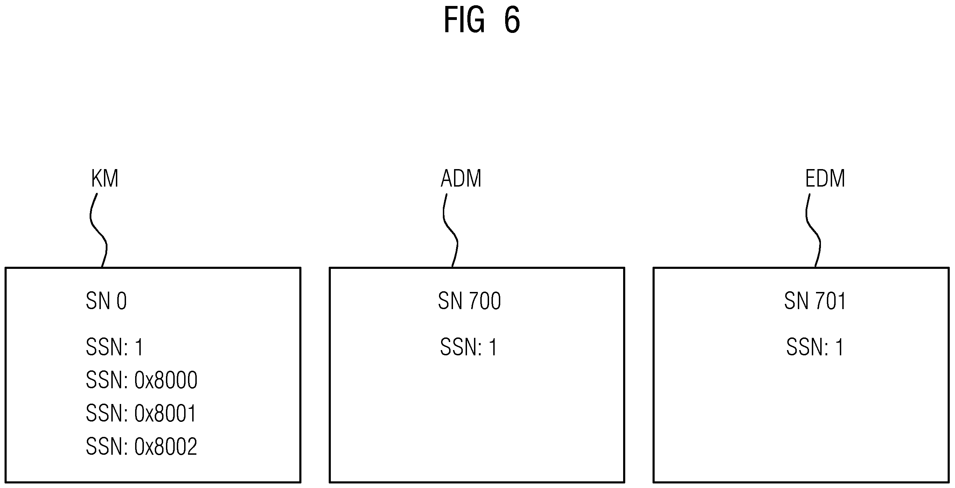

Mit der FIG 6 wird eine mögliche Modulkonfiguration einer Profinet-AR bzw. der Application-Relationschip AR dargestelllt. Es wird ein Kopfmodul KM, ein Ausgangsdatenmodul ADM und ein Eingangsdatenmodul EDM benötigt. In dem Kopfmodul KM wird eine Slotnummer SN und eine Subslotnummer SSN vermerkt. Ebenso wird es in dem Ausgangsdatenmodul ADM (ADM dimensioniert die OCR)und in dem Eingangsdatenmodul EDM (EDM dimensiniert die ICR) durchgeführt. Die beispielhafte Modulkonfiguration gemäß FIG 6 ist beispielsweise für ein physisches Feldgerät FG1 mit einem Ethernet Interface, welches zwei Ethernet Ports aufweist, konfiguriert. Das Kopfmodul KM erhält eine Slotnummer 0 und entsprechende Subslotsnummer 1 bzw. 0X8000, 0X8001 und 0X8002.

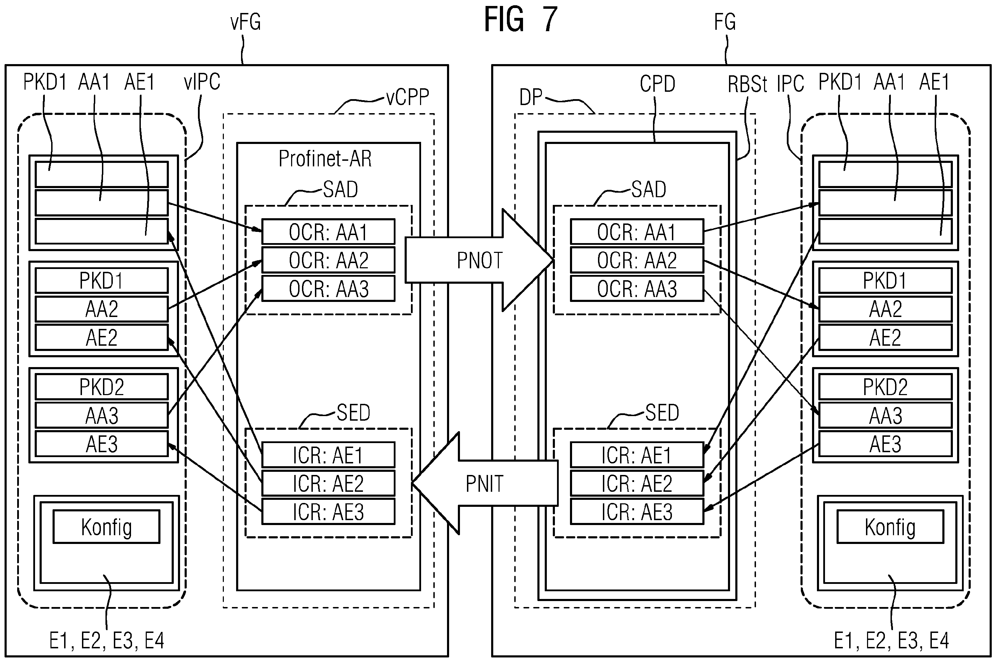

Mit der FIG 7 wird der Informationsaustausch zwischen dem virtuellen Feldgerät vFG und dem physischen Feldgerät FG symbolisiert. Über ein Profinet-Output-Telegramm PNOT werden über ein Summenausgangsdatentelegramm SAD und einer Output-Communications-Relationschip OCR die ersten aktuellen Ausgangsdaten AA1, die zweiten aktuellen Ausgangsdaten AA2 und die dritten aktuellen Ausgangsdaten AA3 mittels des virtuellen Konvergenz-Protokolls-Mittel vCPP aus dem virtuellen Feldgerät vFG zum physischen Feldgerät FG übertragen. Das Summenausgangs-Datentelegramm SAD wird im Device Prozess bzw. im Datennetzwerk-Kommunikations-Mittel DP abgebildet. Vom Feldgeräte-Bus-Stellvertreter RBSt, nämlich dem Rückwandbus Proxy, werden die Daten weitergereicht in das Interprozess-Kommunikations-Mittel IPC und danach vom Rückwandbus-Prozess an die Elektronikmodule versendet. Andersherum werden die aktuellen Eingangsdaten von den Elektronikmodulen durch den Rückwandbus-Prozess gelesen und dann dem Interprozess-Kommunikations-Mittel IPC zur Verfügung gestellt. Diese Daten werden aus dem Interprozess-Kommunikations-Mittel IPC in einem Summeneingangs-Datentelegramm SED als erste aktuelle Eingangsdaten AE1, zweite aktuelle Eingangsdaten AE2 und dritte aktuelle Eingangsdaten AE3 im Konvergenz-Protokoll-Mittel CPP des Feldgeräte-Bus-Stellvertreters RBSt bzw. im Rückwandbus Proxy abgebildet und über ein Profinet-Inputtelegramm PNIT über das Datennetzwerk PN zum virtuellen Feldgerät vFG transportiert. Dort wird wiederum in dem virtuellen Konvergenz-Protokoll-Mittel vCPP das Summeneingangs-Datentelegramm SED abgebildet, welches wiederum mit dem ersten aktuellen Eingangsdaten AE1, zweiten aktuellen Eingangsdaten AE2 und dritten aktuellen Eingangsdaten AE3 im virtuellen Interprozess-Kommunikations-Mittel vIPC abgebildet wird. Danach stehen die Eingangsdaten dem Device Prozess im virtuellen IM zur Weiterverarbeitung zur Verfügung.

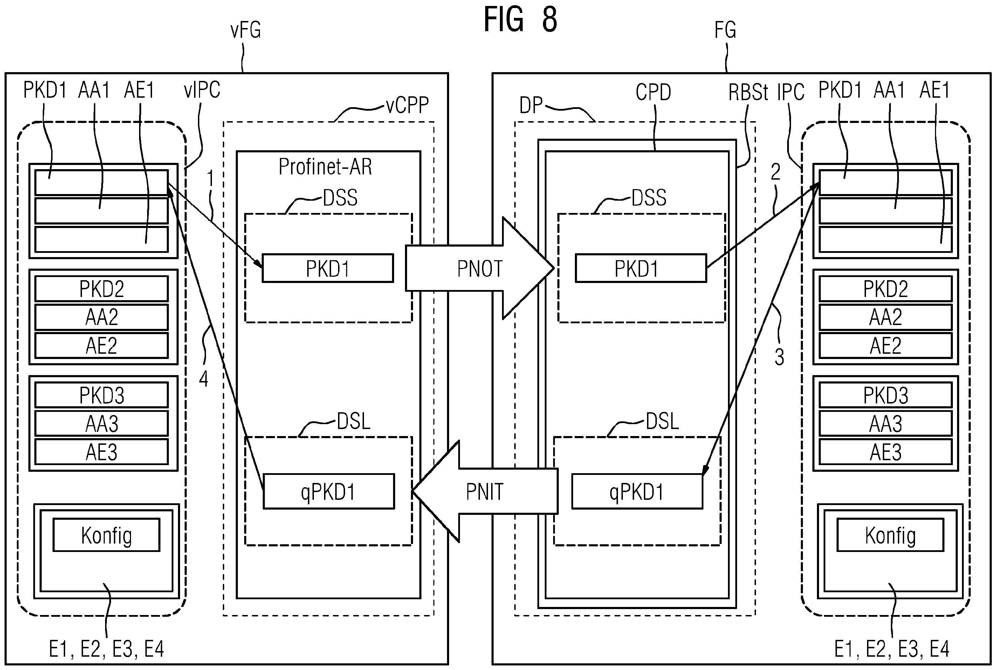

Analog zu FIG 7 werden gemäß FIG 8 die Abbildung von projektierten Konfigurationsdaten aufgezeigt. In einem Kopierschritt 1 werden von dem virtuellen Interprozess-Kommunikations-Mittel vIPC erste projektierte Konfigurationsdaten PKD1 in einem Datensatzschreibe-Telegramm DSS mittels des virtuellen Konvergenz-Protokoll-Mittels vCPP zum physischen Feldgerät FG transportiert. Dort angekommen enthält der Device-Prozess nun wieder in dem Datensatzschreibe-Telegramm DSS die ersten projektierten Konfigurationsdaten PKD1, welche in einem Empfangsschritt 2 in Interprozess-Kommunikations-Mittel IPC abgebildet werden. Mit einem Sendeschritt 3 wird über ein Datensatzlesetelegramm DSL dem virtuellen Feldgerät vFG mitgeteilt, dass nun ein quittierter Datensatz über projektierte Konfigurationsdaten qPKD1 vorliegt. Diese quittierten ersten Konfigurationsdaten qPKD1 werden in einem Datensatzlese-Telegramm DSL durch das virtuelle Konvergenz-Protokoll-Mittel vCPP transportiert -und danach in einem Übermittlungsschritt 4 wieder dem virtuellen Interprozess-Kommunikations-Mittel vIPC bereitgestellt.

Oder anders gesagt, mit der Betrachtung auf die Profinet-Kommunikations-Begriffe wird über eine Application-Relationschip AR, also die beschriebene Profinet-AR, eine Output-Kommunikation eine Output-CR bzw. Output-Kommunikations-Relationschip OCR für den Austausch zyklischer Ausgangsdaten, sowie ein Input-CR für den Austausch zyklischer Eingangsdaten verwendet. In einem CR-Telegrammpuffer können nun maximal mögliche Ausgangsdatenvolumen bzw. Eingangsdatenvolumen der physischen Feldgeräte in jeweils einem Profinet-I/O-Telegramm übertragen werden. Da sich eine "Ownership" (Besitz) eines Submoduls, durch eine SPS-Verbindung dynamisch ändern kann bzw. Fehler bei der Projektierung möglich sind, ist es notwendig, dass die jeweils gültigen Submodul-Verbindungen und dessen Verbindungsinformationen mittels eines Parametrier-Records zwischen virtuellen und physischen Feldgeräten synchronisiert werden.

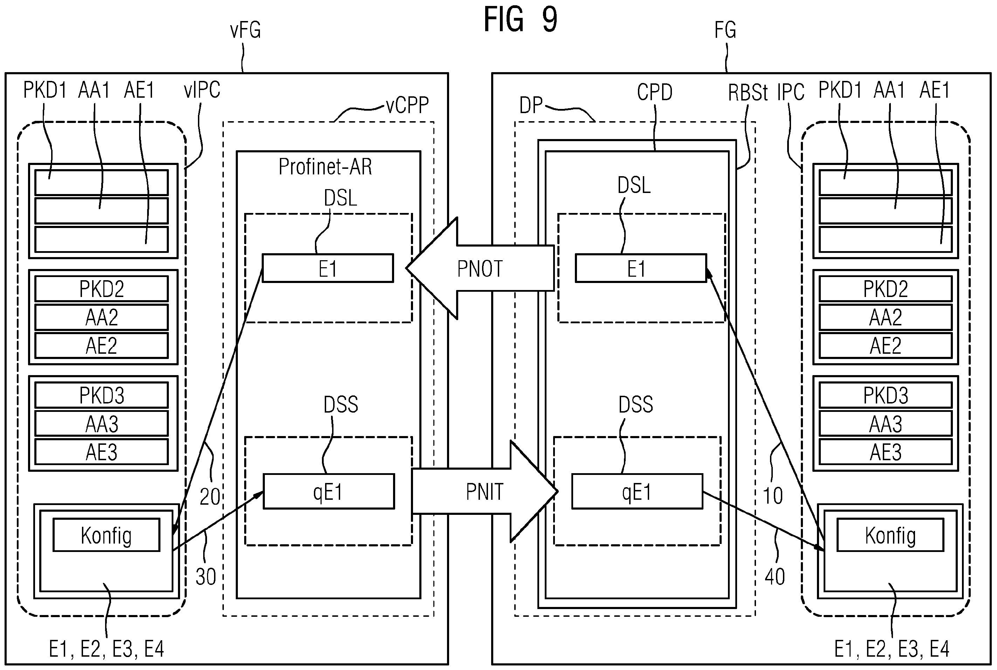

Mit der FIG 9 wird aufgezeigt, wie die Kommunikation gemäß den Ereignisdaten E1,E2,E3,E4 durchgeführt wird. Das physische Feldgerät FG1 z.B. sendet einen Anfrageschritt 10 in dem Anfrageschritt 10 wird mit einem Datensatzlesetelegramm DSL angefragt, ob neue azyklische Daten, beispielsweise Ereignisse E1,E2,E3,E4 vorliegen. Und tatsächlich liegt ein Ereignis E1 = "Modul auf Slot 3 gesteckt" vor. Dieses Datensatzlese-Telegramm DSL wird nun wieder über das Profinet-Record-Telegramm zum virtuellen Feldgerät vFG übertragen und kommt dort auch als Datensatzlesetelegramm DSL mit dem Ereignis E1 an, wobei in einem Übermittlungsschritt 20 dies dem virtuellen Interprozess-Kommunikations-Mittel vIPC mitgeteilt wird. Nun wird in einem Antwortschritt 30 in einem Datensatzschreibe-Telegramm DSS ein quittiertes Ereignis qE1 über das Profinet-Record-Telegramm zum physischen Feldgerät FG übermittelt, welches dies in einem Quittierungsschritt 40 nun wieder in das Interprozess-Kommunikations-Mittel IPC einträgt.

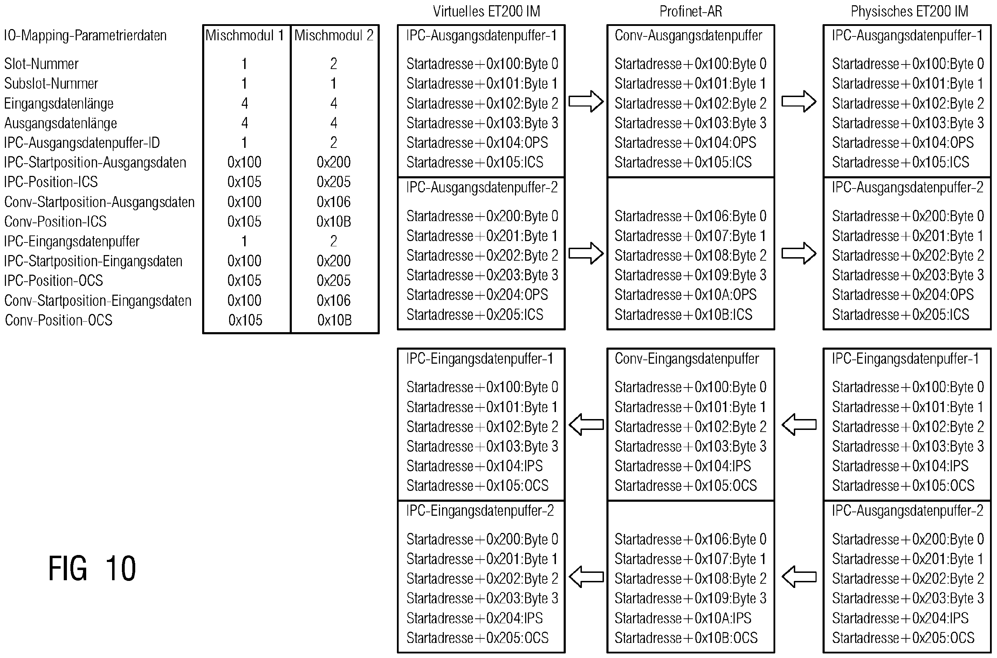

FIG 10 illustriert die Kommunikationsstruktur bzgl. der Prozessdaten zwischen einem virtuellem Feldgerät VFG1, einer Profinet-AR Application-Relationship AR, und einem physischen Feldgerät FG1. Das Diagramm ist in drei Hauptspalten unterteilt, die jeweils eine dieser Komponenten darstellen.

Links zeigt das virtuelle Feldgerät VFG1 ET200 IM eine IO-Mapping-Parametrisierungstabelle mit zwei Spalten, die verschiedene Parameter und ihre entsprechenden Werte enthalten. In der Mitte zeigt die Spalte Profinet-AR zwei Sätze von IPC-Ausgangsdatenmodul (IPC Output Data Module) und IPC-Eingangsdatenmodul (IPC Input Data Module), die jeweils mehrere Subslot-Einträge enthalten. Die rechte Spalte zeigt das physische Feldgerät vFG1 mit ähnlichen Strukturen für IPC-Ausgangsdatenmodul und IPC-Eingangsdatenmodul.

Pfeile zwischen den Spalten zeigen den Datenfluss zwischen den virtuellen und physischen Feldgeräten durch das Profinet-AR wird demonstriert, wie Informationen in beide Richtungen unter Verwendung dieser Kommunikationsstruktur ausgetauscht werden.

## Patentansprüche

1. Automatisierungsanordnung (101), umfassend:
eine IT-Ebene (IT), in welcher mittels einer IT-Infrastruktur, eine Verarbeitung, Erstellung, Speicherung, ein Austausch und ein Abrufen von Daten realisiert ist,
eine OT-Ebene, in welcher mittels Automatisierungskomponenten (AG1,AG2, FG1,...,FG4) eine Überwachung und eine Steuerung von industriellen Prozessen (100) realisiert ist,
ein Datennetzwerk (PN) auf Ethernet-Basis, welche für eine Kommunikation zwischen der IT-Ebene (IT) und der OT-Ebene ausgestaltet und angeordnet ist, wobei mindesten eine Automatisierungskomponente (AG1,AG2, FG1,...,FG4) als ein Feldgerät (FG1,...,FG4) ausgestaltet ist und ein Feldgerät (FG1,...,FG4) mindestens ein Modul (M1,...,M4) aufweist, wobei das oder die Module (M1,...,M4) über einen Feldgeräte-Bus (RB) untereinander und mit dem Feldgerät (FG1,...,FG4) kommunizieren,
**dadurch gekennzeichnet, dass**
in der IT-Infrastruktur zumindest zu einem Teil der physischen Feldgeräte (FG1,...,FG4) in der OT-Ebene (OT) je ein virtuelles Feldgerät (vFG1,...,vFG4) in der IT-Ebene (IT) zugeordnet ist, wobei die einander zugeordneten physischen Feldgeräte (FG1,...,FG4) und die virtuellen Feldgeräte (vFG1,...,vFG4) ausgestaltet sind über das Datennetzwerk (PN) mit einem Konvergenz-Protokoll (CP) zu kommunizieren.

2. Automatisierungsanordnung (101) nach Anspruch 1, **dadurch gekennzeichnet, dass** das Konvergenz-Protokoll (CP) auf den Industrial-Ethernet-Standard aufbaut und zwischen den physischen Feldgeräte (FG1,..,FG4) und den virtuellen Feldgeräte (vFG1,..,vFG4) eine Application-Relationship (AR) etabliert ist.

3. Automatisierungsanordnung (101) nach Anspruch 1 oder 2, wobei
ein physisches Feldgerät (FG1,...,FG4) folgende Komponenten aufweist
ein Datennetzwerk-Kommunikations-Mittel (DP),
ein Interprozess-Kommunikation-Mittel (IPC) und
ein Rückwand-Bus-Kommunikations-Mittel (RBP),
wobei das Datennetzwerk-Kommunikations-Mittel (DP) zum einen ausgestaltet ist auf dem Datennetzwerk (PN) Informationen auszutauschen und zum anderen einen Feldgeräte-Bus-Stellvertreter (RBSt) aufweist, welcher mit einem Konvergenz-Protokoll-Mittel(CPP) ausgestaltet ist Datensätze in Telegrammen (PNT) aus dem Konvergenz-Protokoll (CP) an verschiedene Datenformate für ein Bus-Interface (47) des Feldgeräte-Busses (RB )anzupassen,
wobei das Interprozess-Kommunikation-Mittel (IPC) ausgestaltet ist, einen bidirektionalen Informationsaustausch zwischen dem Datennetzwerk-Kommunikations-Mittel (DP) und dem Rückwand-Bus-Kommunikations-Mittel (RBP) durchzuführen,
das Rückwand-Bus-Kommunikations-Mittel (RBP) ist weiterhin ausgestaltet für die Kommunikation und mit den Modulen (M1,...,M4) über den Feldgeräte-Bus (RB).

4. Automatisierungsanordnung (101) nach einem der Ansprüche 1 bis 3, wobei ein virtuelles Feldgeräte (vFG1,...,vFG4) folgende Komponenten aufweist ein virtuelles Datennetzwerk-Kommunikations-Mittel (vDP),
ein virtuelles Interprozess-Kommunikation-Mittel (vIPC) und ein virtuelles Konvergenz-Protokoll-Mittel (vCPP),
wobei das virtuelle Datennetzwerk-Kommunikations-Mittel (vDP) ausgestaltet ist auf dem Datennetzwerk (PN) Informationen auszutauschen und mit dem physischen Feldgerät (FG1,...,FG4) über einen zusätzlichen virtuellen Vermittlungs-Knoten (vVK) zu kommunizieren, welcher über einen virtuellen Kommunikationskanal (vKK) mit dem virtuellen Konvergenz-Protokoll-Mittel (vCPP) in Verbindung steht und weiterhin einen virtuellen Feldgeräte-Bus-Stellvertreter (vRBSt) aufweist, welcher mit einer Datenweiche (DW) ausgestaltet ist,
wobei das virtuelle Interprozess-Kommunikation-Mittel (vIPC) ausgestaltet ist einen bidirektionalen Informationsaustausch zwischen dem virtuellen Datennetzwerk-Kommunikations-Mittel (vDP) und dem virtuellen Konvergenz-Protokoll-Mittel (vCPP) durchzuführen, wobei die Komponenten derart zusammenwirken und ausgestaltet sind, dass Datensätze in Telegrammen (PNT) von dem physischen Feldgerät (FG1,...,FG4) folgenden Kommunikationspfad (KP) nehmen: ankommend in dem virtuellen Datennetzwerk-Kommunikations-Mittel (vDP) über den Vermittlungs-Knoten (vVK) in den virtuellen Kommunikationskanal (vKK) und schließlich in das virtuelle Konvergenz-Protokoll-Mittel (vCPP), welches ausgestaltet ist Datensätze aus den Telegrammen (PNT) des Konvergenz-Protokoll (CP) an verschiedene Datenformate von Feldbusprotokollen anzupassen und in dem virtuelle Interprozess-Kommunikation-Mittel (vIPC) bereit zu stellen.

5. Automatisierungsanordnung (101) nach einem der Ansprüche 1 bis 4, wobei auf den virtuellen Feldgeräten (vFG1,...,vFG4) Konfigurations-Daten (Config) der physischen Feldgeräte (FG1,...,FG4) hinterlegt sind, um diese bei Bedarf an die physischen Feldgeräten (FG1,...,FG4) über das Konvergenz-Protokoll (CP) zu übermitteln.

6. Automatisierungsanordnung (101) nach einem der Ansprüche 1 bis 5, **dadurch gekennzeichnet, dass** das Konvergenz-Protokoll (CP) die Application-Relationship (AR) also eine Profinet-AR-Struktur aufweist, wobei:
das virtuelle Feldgerät (vFG1,...,vFG4) als Profinet-Controller und das physische Feldgerät (FG1,...,FG4) als Profinet-Device konfiguriert sind, und die Application-Relationship (AR) mindestens einen Communication-Relationship (CR)) umfasst, insbesondere zwei Communication-Relationships (CR) für den Austausch der zyklischen IO-Data, sowie mindestens eine Record-CR für azyklische Record-Data.

7. Automatisierungsanordnung (101) nach Anspruch 6, **dadurch gekennzeichnet, dass**:
- der Communication-Relationship (CR) für den Datensatz für IO-Data für den Austausch zyklischer I/O-Daten zwischen dem virtuellen und dem physischen Feldgerät konfiguriert ist,
- der Communication-Relationship (CR) für den der Datensatz für Record-Data für den Austausch azyklischer Daten zwischen dem virtuellen und dem physischen Feldgerät konfiguriert ist.

8. Automatisierungsanordnung (101) nach Anspruch 6 oder 7, **dadurch gekennzeichnet, dass** der Austausch zyklischer I/O-Daten über den Communication-Relationship (CR) für den Datensatz für IO-Data erfolgt, wobei:
- Eingangsdaten vom physischen Feldgerät (FG1,...,FG4) zum virtuellen Feldgerät (vFG1,...,vFG4) übertragen werden,
- Ausgangsdaten vom virtuellen Feldgerät (vFG1,...,vFG4) zum physischen Feldgerät (FG1,...,FG4) übertragen werden,
- die I/O-Daten in Profinet-Frames gekapselt sind, die über das Datennetzwerk (PN) transportiert werden.

9. Automatisierungsanordnung (101) nach einem der Ansprüche 6 bis 8, **dadurch gekennzeichnet, dass** der Austausch azyklischer Daten über den Datensatz für Record-Data erfolgt, wobei:
- Lese- und Schreibzugriffe auf Datensätze des physischen Feldgeräts (FG1,...,FG4) durch das virtuelle Feldgerät (vFG1,..,vFG4) ermöglicht werden,
- die azyklischen Daten in Profinet-Acyclic-Frames gekapselt sind, die über das Datennetzwerk (PN) transportiert werden.

10. Automatisierungsanordnung (101) nach einem der Ansprüche 6 bis 9, **dadurch gekennzeichnet, dass** das Konvergenz-Protokoll (CP) eine bidirektionale Echtzeitkommunikation zwischen den physischen Feldgeräten (FG1,...,FG4) und den virtuellen Feldgeräten (vFG1,...,vFG4) über die etablierte Application-Relationship (AR) ermöglicht.
